# EUROPÄISCHE PATENTANMELDUNG

(11) **EP 3 261 237 A1**
(43) Veröffentlichungstag der Anmeldung: **27.12.2017**
(21) Anmeldenummer: 16020239.6
(22) Anmeldetag: 21.06.2016
(51) Int. Cl.: H02K 41/03, H02P 6/00, H02K 19/20, H02K 19/10, H02K 1/24, H02K 9/22

(54) **RADNABENANTRIEB MITTELS ELEKTRISCHER, SEGMENTIERTER RINGMASCHINE NACH DEM RELUKTANZPRINZIP**

(71) Anmelder: Reimers, Jan-Dirk, 52074 Aachen (DE)
(72) Erfinder: Reimers, Jan-Dirk, 52074 Aachen (DE)

(57) **Zusammenfassung**

Die Erfindung betrifft eine Anordnung in Form einer elektrischen Ringmaschine in Ausführung einer Reluktanzmaschine, die als geschaltete oder Synchronreluktanzmaschine betrieben wird, bei der
- mittels Anordnung der Statorausführung des mindestens einem Statorblocks in radialer oder axialer Luftspaltorientierung,
- der mindestens eine Statorblock den Ringläufer nur partiell zum Umfang umgibt,
- die Wicklungen in Zahnspulenausführung oder verteilter Ausführung alleinig auf den Statorbereich ausgeführt sind,
- der Läuferring in scheibenförmiger oder trommelförmiger Ausführung aus einer Tragstruktur und geblechten Ringsegmenten zur Flussführung besteht,
- dessen Wicklungssystem des mindestens einen Statorblocks aus mindestens 2 Phasen besteht, die mit mindestens 1 maschinenseitigen Umrichterkreis pro Phase bestromt werden können,
- die Umrichterkreise über eine Synchronisationsmöglichkeit zur Phasenbestromung aufweisen
- netzseitig mindestens 1 Umrichterkreis zum motorischen und generatorischen Betrieb (4-Quadrantenbetrieb) aufweist.

## Beschreibung

### 1. Problembeschreibung und Stand der Technik

Die vorliegende Erfindung betrifft eine Anordnung eines Radnabenantriebs mittels elektrischer Arbeitsmaschine, die als segmentierte Ringmaschine ausgeführt und für den 4-Quadrantenbetrieb vorgesehen ist.

Derartige Anordnungen sind im Stand der Technik der elektrischen Radnabenantriebe bereits in einigen typischen Ausführungen bekannt. Radnabenmotoren werden bei Elektromobilen, Flurförderfahrzeugen oder auch Elektrofahrrädern eingesetzt und zeichnen sich bei vielen Bauformen dadurch aus, dass das Antriebsmoment nicht über ein Getriebe und eine Antriebsachse an ein angetriebenes Rad übertragen wird, sondern das angetriebene Rad unmittelbar mit einem Rotor des Radnabenmotors verbunden ist. Beispielsweise offenbart die Druckschrift DE 10 2006 040 220 A1 den Radnabenantrieb für ein Fahrzeug.

Bei Radnabenantrieben werden die Felgenringe üblicherweise durch, in vielen Fällen beidseitig, angeordnete Abdeckschalen an der Radnabe gehalten, wie in DE 10 2013 208 226 A1 dargestellt oder auch nur verschlossen, so dass sich ein Außenrotor, an den sich nach außen hin eine Felge anschließt, konzentrisch um den Innenstator drehen kann. Ein spiegelsymmetrischer Aufbau mit Außenstator ist ebenso fallweise denkbar. Die Abdeckschalen fassen den durch den Stator und Rotor gebildeten Radnabenantrieb ein und verhindern so das Eindringen von Verschmutzungen und Feuchtigkeit ins Innere des Radnabenantriebs. Dies ist nötig, da die zumeist verwendeten Bauformen der Elektromaschinen sehr empfindlich gegenüber metallischen und nichtmetallischen Verschmutzungen sein können, z.B. bei Permanentmagnetmaschinen oder elektrisch erregten Synchronmaschinen, bei denen eine Stromführung z.B. mittels Schleifkontakte auch auf den bewegten Maschinenteilen für die Erregung nötig ist.

Durch elektrische Verluste bei der Bestromung der Spulen sowie durch Wirbelstromverluste entsteht im Inneren des Radnabenantriebs Verlustwärme, die zum Vermeiden einer Überhitzung von Bauteilen innerhalb des Radnabenantriebs abgeführt werden muss.

Durch die Abdeckschalen wird jedoch auch ein Austausch von Luft und somit eine Abführung von im Betrieb des Radnabenantriebs erzeugter Wärme verschlechtert. Die Kühlung erfolgt durch geeignete Luftzuführung von außen und führt zu einem hohen Temperaturgradient der Bauteile von innen nach außen, wie in DE 10 2013 202 592. Bei Fahrzuständen mit hoher Belastung können in den Wickelköpfen der Statorspulen dennoch Temperaturen auftreten, die die für lackbeschichtete Kupferdrähte oder die Isolierung, Blechverbackung, etc. zulässigen Temperaturen deutlich überschreiten. Zudem sind üblicherweise, meist in der Nähe oder unter Umständen auch direkt in den Wicklungen der Statorspulen, Sensoren (z.B. Hallsensoren) zur Messung der Läuferlage eingebaut. Auch derartige Sensoren sind temperaturempfindlich und fallen erfahrungsgemäß bedingt durch hohe Belastungen regelmäßig aus. Als Lösung wird in DE 10 2013 202 592 die Verwendung von Reluktanzmaschinen als Nabenantrieb beschrieben, die aufgrund ihrer Funktionsweise eine erheblich höhere Läufertemperatur vertragen und hier mit einer speziellen Luftführung im Felgenbereich ergänzt werden. Es werden die prinzipbedingten Vorteile der Reluktanzmaschine für den Verwendungszweck des Radnabenantriebs beschrieben, eine spezielle Bauausführung der Reluktanzmaschine wird nicht beschrieben.

Als geeignete Lösung wird in DE 10 2009 021 540 ein Direktantrieb mittels Transversalflussreluktanzmaschine vorgestellt. Im Ergebnis wird eine Außenläufermaschine gelehrt, bei der der äußere rotierende Motorteil direkt eine Felge antreiben kann. Die außen liegenden Statoren können bevorzugt in 4 Wirkbereiche, bestehend aus Gleichteilen und mindestens in 3 Phasen aufgeteilt, aber umfangssymmetrisch auf den Umfang verteilt werden und geeigneter Weise beidseitig wirkend radial oder axial zum Kraftausgleich auf den Stator angeordnet werden. Die Viertelringsegmente des umfangssymmetrischen Stators können aus weiterhin unterteilten Blechsegmenten gefertigt werden.

Der größte Nachteil der Lösung ist die U-förmige Statorzahnstruktur, die zu einer erheblich verminderten Luftspaltflächenausnutzung führt, da die benötigten Wicklungen diese Fläche einnehmen. Der Läufer muss dadurch im erheblichen Maße größer gebaut werden, was zu einem Gewichts und Leistungsdichtenachteil der Lösung führt. Die Kapselung durch die vollumschlossene Ausführung mit beidseitigen Statorscheiben vermindert die Wärmeabfuhr. Ein Kühlkonzept ist nicht beschrieben, eine Lösung zur Verminderung des Wärmegangs (Wärmeausdehung) besteht nur in der radialen Luftspaltausrichtung. Ein Baukastenprinzip zur Addition der Lösungscharakteristik in Form einer durchmesserabhängigen Skalierung ist nicht erkennbar, ein Verschalten von mehreren Scheiben in Achsausrichtung wird jedoch vorgeschlagen.

Ebenso zeigt DE 198 00 667 eine Transversalflussmaschine mit doppelwirkendem Stator mit Kraftausgleich auf den Läufer, jedoch führt auch hier eine allseitig umschlossene Bauform zu einem ungünstigen Wärmehaushalt des Ringantriebs für einen Radnabenantrieb. Eine Kompensation des Wärmegangs des Ringantriebs ist selbst bei einer Bauform in axialer Luftspaltausrichtung, bei der es Bedeutung hätte, nicht beschrieben. Ein Baukastenprinzip zur Leistungsskalierung ist nicht offenbart. In der EP 1 720 236 wird eine weitere beidseitig wirkende Reluktanz-Ringmaschine für Radnabenantriebe beschrieben, bei der ebenfalls mehrere abgesetzte Umfangsbereiche als Dreiphasensystem betrieben werden. Die den Läufer umfassenden Jochbleche, die als Stator fungieren, können aus Kammplatten zusammengesetzt werden, als innen oder Außenläufer ausgeführt werden und in Segmente aufgeteilt werden. Eine jochlose Ausführung oder radiale Ausrichtung der Luftspaltfläche ist nicht offenbart, ebenso wenig ein Konzept zur Baukastenbildung oder Kompensation des Wärmegangs.

Darüber hinaus bestehen für Direktantriebe mittels ringförmiger Reluktanzmaschinenanordnungen diverse Lösungen aus dem Bereich des klassischen Reluktanzmaschinenbaus zur Verfügung, wie in US 4.998.052 ein Reluktanzdirektantrieb für eine Waschmaschinentrommel beschrieben ist. Hier ist eine klassische Zahnspulenlösung mit Reluktanzaußenläufer beschrieben, die die Elemente der Kühlluftführung, Polverschaltung und den Umrichterbau für diese Antriebsart offenbart. Eine Kompensation des Wärmegangs, eine Modularisierung und Baukastenbildung wird nicht offenbart.

Im Ergebnis ist festzuhalten, dass bereits unterschiedliche Ringmaschinen und Bauformkonzepte für Elektromaschinen in Radnabenantrieben bekannt sind. Dennoch ist es wünschenswert, diese konstruktiv zu verbessern und im Sinne eines Baukastenkonzepts zu erweitert, damit sie kostengünstiger und wandlungsfähiger werden und dadurch erstmalig einer industriellen Verwendung zugeführt werden können.

Das Problem der eingangs beschriebenen Elektromaschinen für den Radnabenantrieb und auch der Ausführung als Doppel-Ringmaschine in Reluktanzbauform ist es, dass die Leistungsdichte zusammen mit dem Wirkungsgrad über die nötige spezifische Wärmeabfuhr bestimmt. Ist die Abwärmeentwicklung zu hoch, kann der Antrieb nicht in der Leistungsdichte betrieben werden, der ihn aufgrund des dann vorliegenden Leistungsgewichts kostengünstig machen würde. Der Antrieb muss in seiner Luftspaltfläche vergrößert werden, der Strombelag muss reduziert werden und der Antrieb ist u.U. zu groß für den Bauraum und zu schwer.

Die Doppelscheibenwirkung ergibt dann keinen Vorteil, selbst bei einem Lastausgleich, da die Tragstruktur bedingt durch Anwendung als Rad nicht leichter gebaut werden kann.

Das Problem innerhalb der Umsetzbarkeit als Radnabenantrieb steht und fällt mit der Möglichkeit den Läufer in erheblichem Maße thermisch auszulasten und gleichzeitig die Luftspaltkonstanz zu wahren. Dies betrifft sowohl den Normalbetrieb, wie auch den Fall einer Störung, wie z.B. einen Wicklungskurzschluss oder eine betriebsbedingte Überhitzung. In beiden Fällen sind die heutigen Umsetzungen nicht betriebssicher.

Bei einer Temperaturdifferenz von 140°C verfügt ein Ringantrieb von 30 cm Durchmesser über einen Wärmegang von 0,4 mm bezogen auf den Durchmesser. Dieser Wärmegang muss bei radialer Luftspaltausrichtung additiv zu den Fertigungstoleranzen und verformungs-/lastbedingten Rundlauftoleranzen berücksichtigt werden und schlägt sich direkt in der ausnutzbaren Leistungsdichte des Antriebs wieder. Die Differenztemperatur ist hier zusammen mit der maximalen Isolationstemperatur entscheidend. Eine Maschine kann , sobald der Wärmegang nicht mechanisch limitierend für den Luftspalt ist, bei niedrigen Umgebungstemperaturen mit mehr Strom betrieben werden, wenn die maximale Wicklungstemperatur nicht überschritten wird.

Diese technischen Probleme werden in keiner vorliegenden Anmeldung gelöst. Eine Umsetzung ist nicht bekannt.

In allen bekannten Konzepten findet sich kein modularer Aufbau des Antriebes und des Umrichters wieder, der z.B. eine Serienfertigung über verschiedene Radantriebe in Skalierung des Durchmessers, der Drehzahl und des Drehmomentes und damit auch der Leistung hinweg berücksichtigt.

Die Elektromaschinen müssen für jede Leistungsklasse oder Drehmomentklasse und deren Nenndrehzahl neu ausgelegt werden, dadurch werden Serieneffekte verschenkt.

### 2. Erfindungsgemäße Lösung

Ausgehend von diesem Stand der Technik ist es eine Aufgabe der vorliegenden Erfindung, eine alternative Anordnung der eingangs genannten Art zu schaffen. Der Erfindung liegt weiterhin die Aufgabe zugrunde, einen Radnabenmotor für ein Fahrzeug vorzuschlagen, welcher verbesserte konstruktive und betriebsspezifische Eigenschaften aufweist.

Diese Aufgabe wird durch einen Radnabenmotor mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein Radnabenmotor vorgeschlagen, welcher vorzugsweise zum Antrieb eines Fahrzeugs, eines Transporthilfsmittels oder Elektrofahrrades geeignet und/oder ausgebildet ist.

Die hier nun vorgeschlagene Lösung bietet eine Anordnung die einen modularen, segmentierten, mehrpoligen Sonderantrieb für hohe Momente bzw. geringe Drehzahlen ermöglicht, wie sie erfindungsgemäß ausgeführt eine Reihe von Vorteilen bietet. Ein "stapelfähiges" oder skalierbares Modul in Form von Elektromaschinen- und Umrichterelementen, welches für eine Baureihe und Varianten dessen von 0,1 bis zu mehreren kW und bevorzugt von 0,1 bis 500 Watt und von 0,5 kW bis 15 kW eingesetzt werden kann, entspräche diesem Ansatz und wird hierfür im Folgenden näher vorgestellt.

Der Radnabenmotor weist einen Elektromotor mit einem ringförmigen Rotor sowie einen oder mehrere Statorblöcke auf. Wobei der Rotor zur Erzeugung eines Motordrehmoments mit dem Stator in Wechselwirkung steht und wobei der Rotor um eine Hauptdrehachse relativ zu dem Stator drehbar angeordnet ist, welcher identisch mit der Radachse ist.

Besonders bevorzugt ist vorgesehen, dass der Elektromotor als ein Reluktanzmotor ausgebildet ist. Beispielsweise kann der Reluktanzmotor als ein Synchronreluktanzmotor, als ein geschalteter Reluktanzmotor oder als ein Reluktanzschrittmotor ausgebildet sein.

Vorzugsweise sind in dem Stator Spulen angeordnet, welche im Betrieb des Reluktanzmotors mit einem elektrischen Stromfluss beaufschlagt sind. Der Rotor ist dagegen bevorzugt passiv und ohne elektrische Anschlüsse ausgebildet. Besonders bevorzugt ist der Rotor, insbesondere der magnetisch aktive Bereich des Rotors, aus einem Weicheisen ausgebildet.

Die folgend beschriebene Erfindung in ihrer ausgeführten Anordnung als Radnabenantrieb zeichnet sich dadurch aus, dass sie in ihrer Baugruppeneinteilung und Funktion in hohem Maße applikationsspezifisch ausführbar beziehungsweise wandelbar ist, ohne in ihren Elementen die Standardbaugruppen bei einer Leistungsskalierung zu verändern. Weiterhin ist sie thermisch erheblich besser ausnutzbar und derart modular, dass sie selbst bei mehrfachem Komponentenausfall ausfallsicher ist und damit als Notlaufsicher eingestuft werden kann. Trotz Modulbauweise können applikationsspezifisch abgestimmte und integrierte Antriebe aufgebaut werden, die dadurch erfindungsgemäß die thermische Grenzleistung, das Gewicht, den Entwicklungs- und Prüfaufwand und die Kompo- nentenkosten im Vergleich erheblich reduzieren.

Ein Verfahren zum Betrieb und zur Prüfung wird ebenfalls vorgestellt.

Die grundsätzliche Nutzung von Ringmaschinen in ihren diversen Ausführungen ist, wie eingangs beschrieben, für Radantriebe nicht neu, hier jedoch werden folgende erfindungsgemäße Elemente ergänzt:
Erfindungsgemäß wird eine einseitig oder doppelseitig wirkende Radial- oder auch Axialflussmaschine, basierend auf einer geschalteten Reluktanzmaschine oder einer Synchronreluktanzmaschine mit oder ohne Permanentmagnetunterstützung der Flussbildung als Ringmaschine ausgebildet, wobei der Stator nur partiell den Umfang des Läufers abdeckt und zumindest aus einem Segmentblock gebildet wird. Es kann auch eine Kombination aus Radial- und Axialflussmaschine, bzw. Transversalflussmaschine Verwendung finden.

Der als Ringelement ausgeführte, geblechte Läufer ist ebenfalls aus einer segmentierten Struktur zusammengesetzt und ist auf einen scheibenförmigen oder trommelförmigen Träger appliziert oder in diesen integriert.

Die erfindungsgemäß als Radantrieb zu integrierende Ringmaschine zeichnet sich in Kombination mit der Segmentierung der Statorblöcke und Vergrößerung der Umfangslänge des Rotors und dadurch im Betrieb temporär nicht aktiv genutzte Bereiche des Rotors und der Ausführung als Reluktanzmaschine dadurch aus, dass diese Kombination derart positiv wirkt, das es betriebs- und bauartbedingt zu einer ungleichen Ausnutzung der Maschine zwischen dem Läuferring und den Statorsegmenten kommt. Der Stator wird im Vergleich zum Rotor/Läufer spezifisch mit einer höheren Leistung ausgenutzt. Der Stator kann derart betrieben werden, dass er eine Kühlung benötigt. Der Läufer hingegen wird nur in den Segmentbereichen aktiv betrieben und dadurch spezifisch geringer ausgenutzt und verfügt über eine Passivkühlung bedingt durch die Eigengeschwindigkeit innerhalb der Umgebungsluft in den nun nicht überdeckten Umfangsbereichen.

Weiterhin kann der Läufer Umge- bungsluft durch den Statorbereich fördern und diesen damit Zwangskühlen. Hierzu ist eine geeignete Luftführung durch die Felgenform sinnvoll, aber nicht zwingend notwendig. Der Stator kann technologisch gut beherrschbar z.B. mit einer Wasserkühlung versehen werden, den drehenden Läufer aber nicht ohne z.B. eine Drehdurchführung. In der Ausführung als Reluktanzmaschine fallen keine Kupferverluste an und der Ringläufer wird durch weniger Verlustwärme erwärmt, kann allerdings bauartbedingt thermisch höher ausgenutzt werden, in dem Falle, wo das thermische Durchmesserwachstum nicht schädlich für den Betrieb ist. Sollte es durchmesserbedingt zu schädlichem Wachstum kommen, so können die Elemente der Passivkühlung des Läufers gerade aufgrund der dann erheblich vergrößerten Abstrahl- und Wärmeübergangsfläche genutzt werden.

Die Ringmaschine besteht damit aus einem Läuferring, der mehr oder minder segmentiert sein kann und aus mindestens einem, bevorzugt 2, 3 oder 4 Statorelementen die symmetrisch oder unsymmetrisch auf den Umfang verteilt sind. Diese können mit einem Joch beidseitig wirkend oder jochlos mittels zweier nun beidseitig wirkender Spulenpakete angeordnet sein. Der Läufer wird nicht vollflächig umfasst, sondern ist bis auf den Erstreckungsbereich der Statorelemente frei zugänglich. Der Stator ist segmentiert und verfügt bei gleicher Statorfläche im Vergleich zu einer Standardmaschine mit vergleichbarer Leistung über einen erfindungsgemäß größeren Durchmesser des Luftspaltes. Dadurch wird der Stator mit einer deutlich höheren Umfangsgeschwindigkeit des Läufers und damit mit einer höheren Polwechselfrequenz betrieben. Dieser im Vergleich vergrößerte Radius führt gemäß der Formeln M=FxL [Nm] und P= 2*PI*n*M [Watt) zu einer besseren Nutzung der Luftspalttangentialkraft zur Drehmomentbildung. Die durch die Segmentierung vergrößerten Statorabstände zur wirksamen Drehachse entsprechen mit ihrer Hebellänge damit gleichsam einer Getriebeübersetzung, die hier allerdings nicht als Getriebe, sondern als Festübersetzung im Sinne eines Hebels wirkt, dies erfolgt auf Kosten der Drehzahl.

Durch die beschriebene Bauform erhält der Statorblock bei identischer Essonscher-Leistungsziffer, wie heute üblich, ein angemessenes bzw. kostengünstiges Verhältnis aus Breite zu Höhe, was dem B zu D Verhältnis bzw. der Bohrung bei klassischen Maschinen entspricht und trotz des vergrößerten Ringgenerators zu einer ausgewogeneren Auslegung der Wicklungselemente und Pole führt.

Durch die Teilung in Statorsegmente wird überdies eine zusätzliche Entkopplung der Polanzahl und Polbreite in Bezug zum Luftspaltdurchmesser möglich. Unter Verwendung der Hebelarmlänge (Durchmesser) als konstruktive Größe ist es erfindungsgemäß erheblich einfacher möglich eine Drehmomentmaschine zu gestalten, da die gewählte Polanzahl nur über ein Segment angesetzt werden braucht und nicht geschlossen auf den Umfang ausgelegt werden muss. Hierdurch sind um den Faktor zwei mehr Varianten möglich, da die Reluktanzpole am Läuferring nicht im Sinne einer Polrichtung orientiert sein müssen. Dadurch bieten sich mehr Freiheitsgrade zur Ableitung eines Baukastenprinzips, welches in seiner Umsetzung dann einfacher einer Drehmomentabstufung entsprechen kann. Insbesondere kann bei schon vorhandenen Statorstrukturen insbesonders bei festen Polweiten im Rahmen eines Baukastenprinzips eine bessere Anpassung an limitierenden Felgenaußendurchmesser erfolgen, als es eine klassische Ringmaschine nach Stand der Technik ermöglichen würde.

Der Luftspalt kann bei dieser Bauform mit im Vergleich erheblich vergrößerten Luftspaltdurchmessers stabilisiert werden. Dies erfolgt nicht, wie üblich, durch eine Verstärkung der Tragstruktur, was zu erheblicher Gewichtszunahme führt, sondern erfindungsgemäß durch die schon beschriebene, mögliche zusätzliche Klappung des Stators nach innen zum Kraftausgleich der radialen Zugkräfte, die ca. ein Zehnfach- bis Zwanzigfaches der Tangentialkräfte der E-Maschine betragen. Der Stator umschließt dann den Läufer sowohl innen als auch außen. Dies führt zu einer weitgehend neutralen Radialkraft auf den Läufer, wenn die Flächen gemäß ihrer Ausdehnung oder Ausnutzung aufeinander abgestimmt werden. Ein gewisses Maß an Asymmetrie der Luftspaltkräfte kann über die Statik des Läufers und der Tragarme für die Statoren abgefangen werden. Die beiden Maschinenwirkseiten können im Fluss verkettet sein, müssen es jedoch nicht. Dadurch ist eine Bauform als jochlose Maschine oder mit Joch in Form einer Transversalfluss-, Axialfluss- oder Radialflussmaschine möglich.

Die Integration der Antriebselemente kann aufgrund der Segmentierung des Statorblocks ähnlich eines Bremssattels an z.B. das Federbein erfolgen, damit der Stator im heute bekannten Kraftfluss für das Fahrwerk erfolgt. Die ringförmige Läuferstruktur kann wie für eine Bremsscheibe heute üblich integriert werden und kann auch aufgrund ihrer thermischen Robustheit z.B. als Bremsscheibe genutzt und doppelfunktional ausgeführt werden. Auch hier erfolgt der Kraftfluss der Drehmomentführung im heute bekannten Sinne für die Radaufnahme und das Fahrwerk. Die Segmentierung des Stators auf einen Teilumfang des Läufers ermöglicht es die Antriebseinheit z.B. im oberen Bereich oberhalb der Radachse auszuführen, wenn z.B. der Bauraum unter der Achse frei bleiben soll.

Diese und weitere Merkmale sowie Vorteile der vorliegenden Erfindung werden anhand der nachfolgenden Beschreibung verschiedener erfindungsgemäßer Anordnungen unter Bezugnahme auf die beiliegende Zeichnung deutlich. Darin ist:

### 3. Beschreibung

Figur 1 eine schematische Darstellung der Betriebsbereiche und dessen Ansteuerung einer geschalteten Reluktanzmaschine für den motorischen Betrieb nach dem Stand der Technik
Figur 2 eine schematische Darstellung eines Halbbrückenumrichters für den 4-Quadrantenbetrieb einer Reluktanzmaschine
Figur 3 eine schematische Darstellung eines Vollbrückenumrichters für den 4-Quadrantenbetrieb einer Reluktanzmaschine
Figur 4 eine schematische Dar- stellung eines Dreiphasenumrichters zum Betrieb einer Maschine mit sinusförmigen Drehfeld oder im Dreiphasenpulsbetrieb
Figur 5 eine schematische Darstellung einer erfindungsgemäßen Anordnung eines Antriebs gemäß einer prinzipiellen Funktionsausführung mit einem äußeren Stator
Figur 6 eine schematische Darstellung einer erfindungsgemäßen Anordnung eines Antriebs gemäß einer prinzipiellen Funktionsausführung mit einem weiteren, äußeren Stator
Figur 7 eine schematische Darstellung einer erfindungsgemäßen Anordnung eines Antriebs gemäß einer prinzipiellen Funktionsausführung mit einem äußeren und einem inneren Stator
Figur 8 eine schematische Darstellung des Antriebs mit zwei inneren und äußeren Polblöcken
Figur 9 eine schematische Darstellung des Antriebs mit verteilten Wicklungen oder Zahnspulenwicklungen. Weiterhin sind Läuferbleche mit Flussbarrieren dargestellt.
Figur 10 ein erfindungsgemäßer Läufer mit Läuferring und dargestellten, segmentierten Blechpaketen
Figur 11 eine schematische Darstellung einer Ausführung eines Läufertragringes mit Segmentaufnahmen und Wärmeausdehnungsfugen für die Segmentbereiche und Kühlschaufeln
Figur 12 eine schematische Darstellung einer Ausführung eines Läufertragringes mit Segmentaufnahmen und Wärmeausdehnungsfugen für die Segmentbereiche
Figur 13 eine schematische Darstellung der Läuferblechsegmente in verschiedenen Ausführungen
Figur 14 schematische Darstel- lung einer Anordnung gemäß einer weiteren Ausführungsform (in Aufsicht) eines Antriebs für eine Reluktanzmaschine in Axialflussführung
Figur 15 eine schematische Darstellung einer Axialflussausführung mit einer Möglichkeit zur Integration des Stators im Bremssattel
Figur 16 Radnabenantrieb in Radialflussführung mit getrenntem Kraftfluss in Radfelge und beidseitig wirkendem Läufer, Läufer ähnlich einer Bremstrommel
Figur 17 Radnabenantrieb in Radialflussführung mit Integration des beidseitig wirkenden Läufers in die Radfelge, Läufer ähnlich einer Bremstrommel
Figur 18 Radnabenantrieb in Radialfluss und seitlich zum Läufer angeordneten Wicklungen im beidseitig auf den Läufer wirkenden Joch, Läufer ähnlich einer Bremstrommel
Figur 19 Radnabenantrieb in Axialflussbauweise und Läuferausführung in Scheibenform ähnlich einer Bremsscheibe
Figur 20 Radantrieb mit Ausführung als Radialflussmaschine und Integration in die äußere Felge, mit innen auf der Achshülse befindlicher Scheibenbremse
Figur 21 Radantrieb für ein Elektrofahrrad als Radialflussausführung und in Form eines scheibenförmigen Läufers und eines Stators mit u-förmigen Joch, ähnlich eines Bremssattels
Figur 22 Radantrieb für ein Elektrofahrrad als Radialflussausführung und in Form eines ringförmigen Läufers und eines Stators mit u-förmigen Joch, ähnlich eines Bremssattels, jedoch mit innen liegender Zusatzbremse

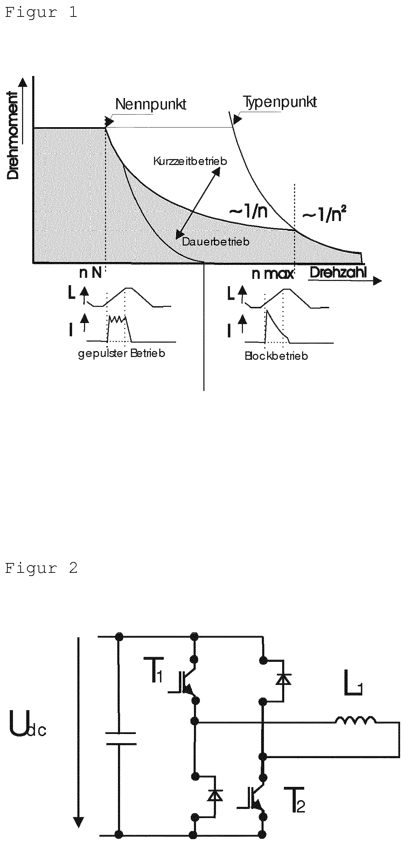

Figur 1 zeigt die typische Kenn- linie einer Reluktanzmaschine, wie sie auch hier bei einer erfindungsgemäßen Ausführung gültig ist. Unterhalb des Eckpunktes kann mit konstantem Drehmoment betrieben werden, oberhalb wird mit abfallendem Drehmoment bei steigender Drehzahl zu rechnen sein.

In bekannter Art und Weise kann eine geschaltete Reluktanzmaschine, nur über den Phasenwinkel des Phasenstroms zwischen motorischem und generatorischem Betrieb umgeschaltet werden, wodurch zum Beispiel bereits ein 2-quadranten Umrichter zum 4-Q Betrieb ausreicht. In Figur 2 ist ein solcher Halbbrückenumrichter für geschaltete Reluktanzmaschinen dargestellt. In Figur 1 wird unter dem Diagramm eine Ansteuerung der Polbestromung bei ansteigender Induktivität bei motorischem Betrieb einer geschalteten Reluktanzmaschine schematisch dargestellt. Der Pol-Phasenstrom ist pollageabhängig in Bezug auf die Winkellage des Läuferpoles zum Statorpol und gemäß der Drehzahl-Drehmomentkennlinie der E-Maschine drehfrequenzabhängig auf zwei Arten anzusteuern: Impulsbetrieb für geringe Drehzahlen und Blockbetrieb für höhere Drehzahlen.

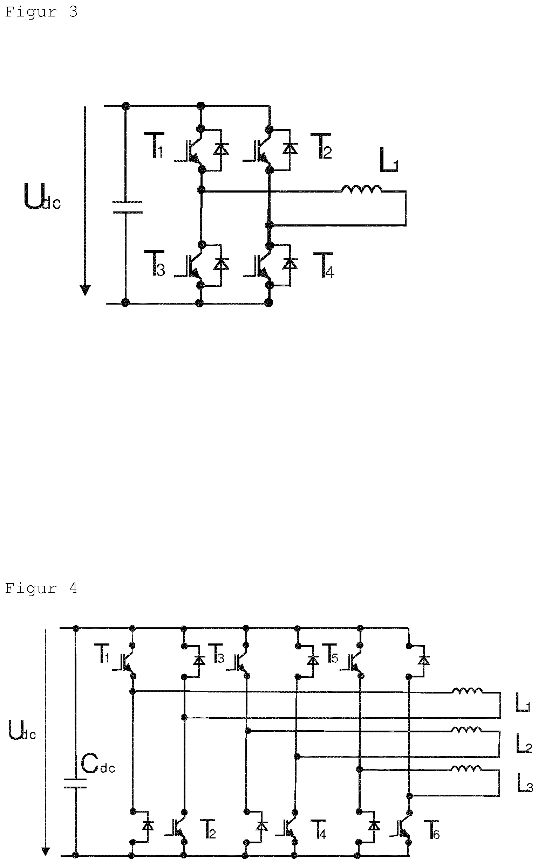

Für einen Betrieb mit einer klassisch sinusgeführten Synchronreluktanzmaschine wird ein Vollbrückenumrichter benötigt, wie er beispielsweise in Figur 3 dargestellt ist. Figur 4 zeigt weiterhin einen dreiphasigen Umrichter, wie er hier erfindungsgemäß für einen Betrieb einer dreiphasigen Maschine Verwendung finden kann.

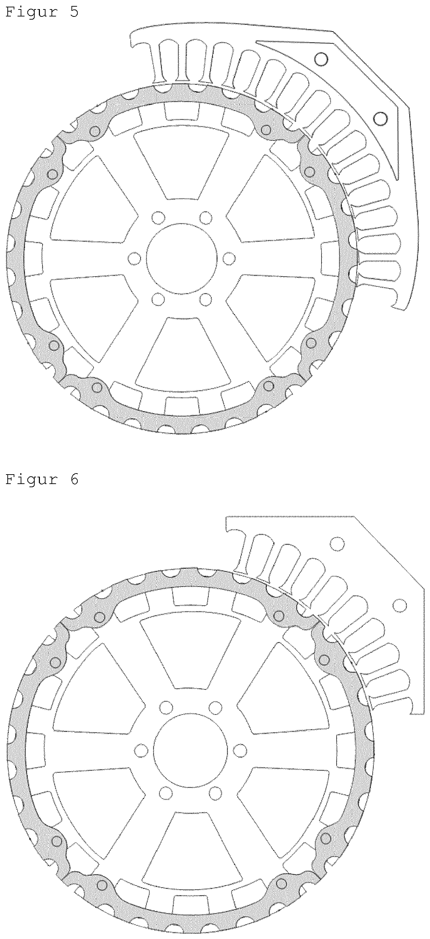

Figur 5 bis 9 zeigen in nicht limitierender Form 5 Bauausführungen des erfindungsgemäßen Radnabenantriebes in diversen Variationen.

Vorteilhafterweise wird der Stator über einen Teilumfang des Ringrotors angeordnet, wie es in Figur 5 und Figur 6 beispielhaft dargestellt wird. Der Stator kann je nach gewünschter Leistung mit 9 Statorzähnen (Figur 5), 12 oder auch 15 Statorzähnen (Figur 6), oder mehr gebaut werden, solange wie hier bei einer 3 phasigen Ausführung die Statorzahnzahl durch die Anzahl der Phasen geteilt werden kann. Eine 2, 4 oder 5-phasige Ausführung wäre ebenso denkbar.

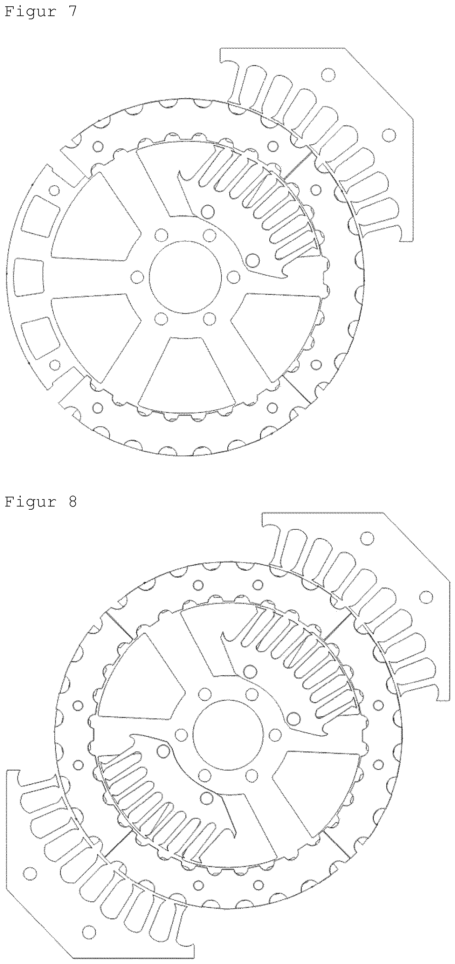

Eine vorteilhafte Bauform sieht vor, sowohl einen äußeren, wie auch einen inneren Stator zu verwenden, wie es in Figur 7 dargestellt ist. Dies führt zu einem weitgehend radialkraftfreien Aufbau, insbesondere wenn der innere Stator über mehr Zähne verfügt, als der äußere. Bei einer möglichen Ausgestaltung der Erfindung weist der Stator einen Statorträger auf. Der Statorträger dient insbesondere zur stationären Befestigung der Statorsegmente bzw. des Radnabenantriebs in seiner Umgebungskonstruktion.

Erfindungsgemäß für den Radnabenantrieb, insbesondere für einen Baukasten zur Leistungsskalierung baugleicher Radnabenantriebe, kann der Antrieb aus mehreren, baugleichen Statorsegmenten ausgeführt werden, die über den Umfang des ringförmigen Läufers verteilt werden, wie es in Figur 8 dargestellt ist. Die Statorsegmentblöcke lassen sich jeweils modular aufaddieren und ergeben in Summe der verwendeten Statorsegmente die nötige Luftspalttangentialkraft, die zusammen mit dem Wirkdurchmesser am Ringläufer und dessen Drehzahl die Antriebsleistung bildet.

Die Statorsegmente enthalten in ihrer modularen Bauweise eine geeignete Leistungsaufteilung, die passend zu einem oder mehrerer Umrichtermodule ist, welche ebenso zur gewünschten Gesamtleistung des Radantriebes aufaddiert werden.

Dadurch lässt sich die Leistung ohne Änderungen der Bauausführung einzelner Baugruppen skalieren und es kann ein Baukasten für verschiedene Leistungsklassen aufgebaut werden. Der Baukasten ist dann gültig für einen Läuferringdurchmesser, wobei die Nutweiten und Windungszahlen der Statorzähne durchaus auf einen weiteren Durchmesser übertragen werden können, wobei dann die Polabstände des Läufers ganzzahlig auf die Umfangslänge übertragbar sein müssen. Im Gegensatz zu nicht segmentierten Statormaschinen ist hier nicht ein ganzzahliges Polpaar gemeint, sondern aufgrund der Besonderheit der Reluktanzmaschine ist hier nur der einfache Polabstand des Läufers heranzuziehen. Dieser führt dann im Bereich zwischen zwei Statorblöcken dazu, dass als Lücke zwischen zwei Statoren der 1,5-fache oder 3 -fache Statorpolabstand eingestellt werden kann, sollte es sich um eine 3-phasige Maschine handeln.

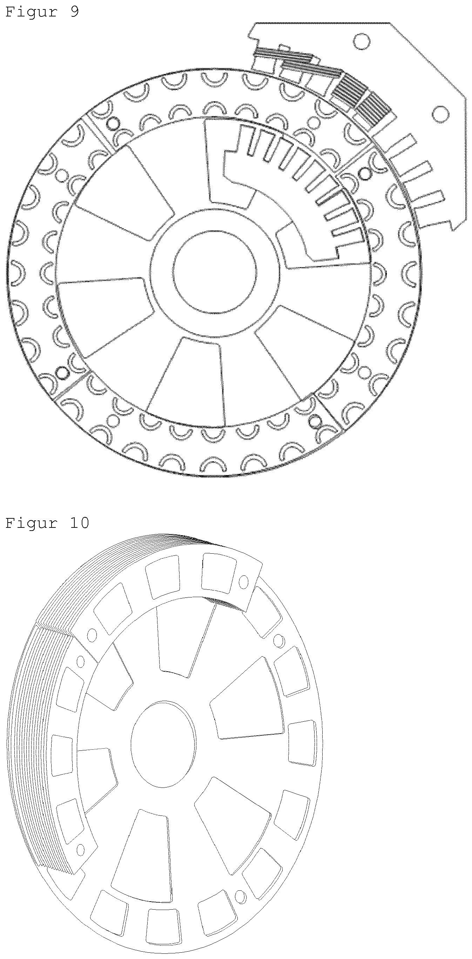

Der Statorsegmentblock kann vorteilhafterweise für diese Form von Segmentierung aus Einzelzahnspulen bestehen, gewisse Formen von verflochtenen bzw. verteilten Spulensystemen sind jedoch auch denkbar, wie Figur 9 zeigt.

Figur 10 zeigt einen Läuferring mit zwei 90°-Blechsegmenten des Reluktanzläufers. Der Läuferring ist vollständig oder partiell geblecht ausgeführt und enthält weder Magnetpole noch stromführende Bauteile, weiterhin ist er erfindungsgemäß ebenfalls segmentiert und wird in eine Trägerstruktur eingebunden, die die Lastführung zur Hauptachse der Radeinheit darstellt.

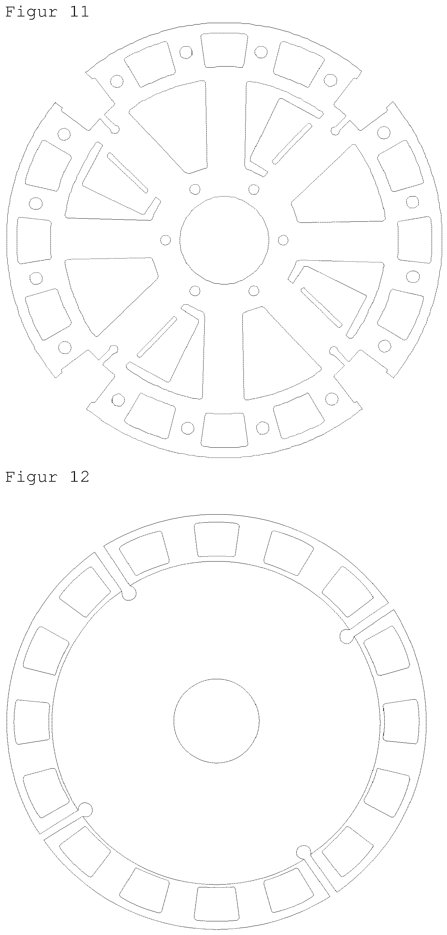

In der Läufertragstruktur sind mehrere axiale Durchbrüche, insbesondere ausgebildet als Kanalabschnitte angeordnet, durch die im Betrieb ein Luftstrom durchströmt. Dadurch, dass axial verlaufende Durchbrüche vorgesehen sind, wird der axiale Luftstrom verbessert oder erst ermöglicht. In den Durchbrüchen können zudem Elemente wie Lüfterschaufeln eingebunden sein, wie in Figur 11 dargestellt ist.

Die Trägerstruktur kann in geeigneter Weise zur Welle oder zu den Läuferblechpaketen elektrisch und / oder thermisch isoliert ausgeführt, um einen Stromfluss und eine schädliche Wärmeabfuhr in die Rad- und Lagerstruktur zu vermeiden. Weiterhin verfügt die Tragstruktur, wie in Figur 11 und 12 abgebildet, erfindungsgemäß über auf dem Umfang verteilte Einschnitte, die zu einer Wärmegangsentkopplung der Blechpakete bezogen auf die Umfangslänge der Blechpakete im Luftspalt gegenüber der Tragstruktur führt. Dies verringert im erheblichen Maße die Zunahme des Durchmessers des Ringgenerators bedingt durch die unsymmetrische Aufwärmung des passiv gekühlten Läuferringes gegenüber einer notwendigerweise zwangsgekühlten Statorstruktur und dessen Haltevorrichtung an der Radaufhängung. Die Blechpaketsegmente können dann in Umfangsrichtung thermisch bedingt wachsen, ohne den Wirkdurchmes- ser zu erhöhen, da die Blechpakete gleichsam in die Einschnitte wachsen und dort eine für den Luftspaltdurchmesser nicht schädliche Längendifferenz kompensieren können. Die Läufersegmentbleche sind dazu mit einem Ausdehnungsspalt beabstandet. Ebenso kann die Trägerplatte thermisch in ihre Einschnitte wachsen. Eine nicht endnahe Befestigung der Läuferbleche, wie sie in Figur 8 und 9 dargestellt ist, begünstig dieses rückwirkungsfreie thermische wachsen der Läuferbleche gegenüber dem Wirkdurchmesser des Gesamtläuferdurchmessers, dadurch wird die radiale Ausrichtung der Luftspaltfläche für den Motor auch bei hohen spezifischen Leistungsdichten erst ermöglicht.

Die Aufteilung der Blechpakte in Bezug zur Tragstruktur kann asymmetrisch bzw. einseitig oder symmetrisch bzw. doppeltwirkend auf beiden Seiten der Tragstruktur erfolgen. In Fig. 10 ist eine einseitige Anordnung der Blechpakete zur Tragstruktur dargestellt.

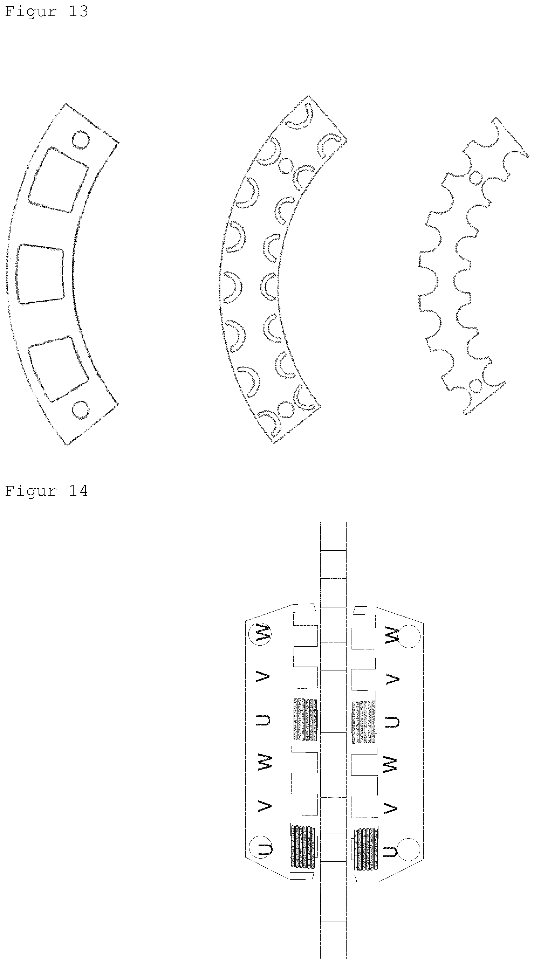

Die Läuferbleche müssen in der üblichen Form als flussführend und flussbehindernd einer D/Q-Polstruktur entsprechen. Hier kann mit einfachen Strukturen, wie Ausschnitten mit und ohne Flussbrücken gearbeitet werden, wie in Figur 13 gezeigt wird.

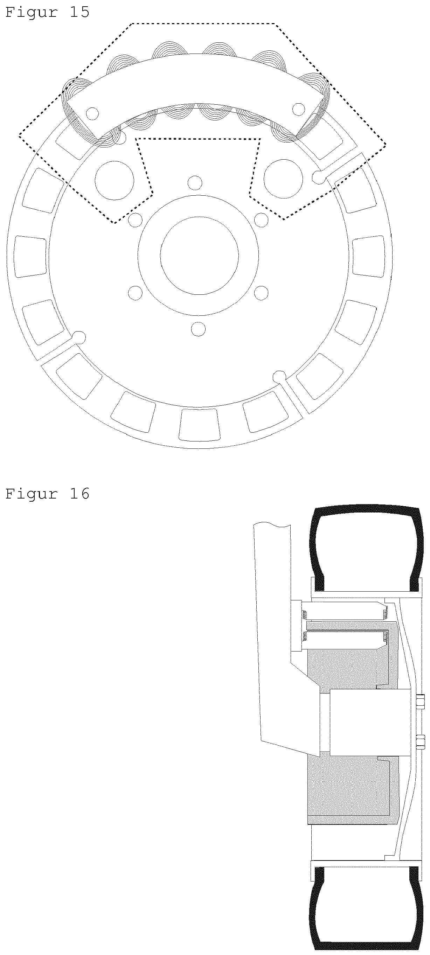

In Figur 14 ist eine Anordnung gemäß einer weiteren Ausführungsform (in Aufsicht) eines Antriebs für eine Reluktanzmaschine in dreiphasiger Wicklung als Zahnspulen und in Axialflussführung dargestellt. Diese Bauform ist in Figur 15 als Radnabenantrieb ausgeführt, bei der die Aufnahme der Statorstruktur gleichzeitig Aufnahme des Bremssattels ein kann.

Der erfindungsgemäße Antrieb enthält eine spezifische Pol- bzw. Polpaardimensionierung, diese ist abhängig von der Drehzahlauslegung bzw. dem bevorzugten Drehzahlbereich bei dem die Maschine betrieben werden soll. Üblicherweise wird die elektrodynamische Auslegung bei diesem Betriebspunkt als Nennbetriebspunkt im Sinne der Drehzahl, des Drehmomentes und der Leistung bezeichnet. Diese Größen sind im klassischen Fall nicht unabhängig voneinander, sie stehen wie in Figur 1 dargestellt in einem Zusammenhang. Eine Drehzahlverringerung kann nicht bei konstanter Leistung ohne eine Erhöhung des Momentes erfolgen, auch wird sich die Polwechselfrequenz der Maschine mit der Drehzahl verringern, damit muss sich die pro Poldurchgang induzierte Tangentialkraft ebenfalls erhöhen, was notwendigerweise eine Erhöhung von Strom oder Spannung benötigt. So ergibt sich auslegungsbedingt eine Poldimensionierung, die in Bezug auf Polwinkel, Polbreite und -tiefe, Windungszahl, Induktivität, Spannung und Strombelag eine optimale Betriebsführung für einen Frequenzbereich bewirkt. Abhängig von der Nenndrehzahl dieser Antriebsauslegung des hier vorgeschlagenen Antriebs ergibt sich bei einer spezifischen Auslegungsgrundfrequenz eine Läuferumfangsgeschwindigkeit, die vom Tragarmdurchmesser und er Polweite abhängig ist. Bei drehzahlabhängiger Wahl des Wirkdurchmessers der Läuferstruktur, gleichsam auch der Hebelarmlänge, kann eine immer identische Umfangsgeschwindigkeit des Radnabenantriebs konstruiert werden, die zu einer immer identischen Polwechselfrequenz führt. Wird hierbei die Polweite konstant gehalten, kann die Leistung als eine reine Funktion der Luftspaltfläche betrachtet werden. Da die Statoren segmentiert sind, ist es möglich über ein Aufaddieren der Pole eine Leistungsanpassung aufzubauen, die durchmesserneutral ist, sie wirkt nur auf die Statorsegmentlänge, nicht auf die Umfangslänge des Rotors, wie bei Ringmaschinen heute naturgemäß zwangsverknüpft. Bei einer Ausführung als Einzelzahnspulensystem kann ein kompletter Leistungsbereich nur durch Addieren der Polzahl und der Anpassung des Läufer-Luftspaltdurchmessers aus nur einer Polauslegung generiert werden. Bei kleinen Maschinen wird der Statorblock varrierend aus Blöcken mit mehreren Wicklungen bestehen und die Blöcke werden summiert. Bei größeren Leistungen werden u.U. Einzelzahnspulen auf einem Träger sinnvoller werden.

Mit einer Statorpolgeometrie mit optimierter Auslegung ist es dann erfindungsgemäß möglich einen Baukasten aufzubauen, der einen sehr großen Leistungs- und Drehzahlbereich abdecken kann, was eine bisher unbekannte Möglichkeit zur Standardisierung und damit Serienfertigung im Elektromaschinenbereich, bei Freiheit der Läuferdurchmesserwahl ermöglicht. Radantriebe können innerhalb eines breiten Leistungsbereiches mit einer Polauslegung auf ein komplettes Baukastensystem reduziert werden. Die Polwicklungen können dadurch im Rahmen einer industriellen Serienfertigung hergestellt werden und werden in einem zweiten Schritt durch das Aufaddieren bzw. Aufstapeln zu einer Anzahl von Polen oder Polsegmenten auf die jeweilige Leistung skaliert, die die gewünschte E-Maschine für das jeweilige System benötigt. Dies ist im Elektromaschinenbau heute unbekannt und nicht möglich. Bei heutigen Maschinen mit Zahnspulenauslegung kann ein gewisser Anteil an Gleichteilen erwirkt werden, bei der hier vorgestellten Lösung besteht der komplette Stator aus Gleichteilen oder Gleichteilsegmenten.

Die segmentierte Bauform der ringförmigen Reluktanzmaschine ermöglicht zunächst eine Modularisierung. Die zusätzliche einmalige Auslegung einer Polgeometrie ermöglicht zudem weiterhin eine Baukastenmethodik und einen Modulbau in Bezug auf einen normierten Pol und einen normierten Umrichter mit einer Skalierbarkeit auf mehrere Leistungsgrößen und Drehmomentklassen, aber auch einen nach heutigen Maßstäben vollständigen Serienbau der Einzelmodule.

Erst die Gruppierung dieser Module bewirkt die Individualisierung zum speziellen Endprodukt eines Radnabenantriebes. Eine Baukastenlösung aus nur einer elektrotechnischen Auslegung heraus ist erfindungsgemäß möglich.

Die einzelnen Wicklungen der Statorpole können eins zu eins mit einem Umrichterkreis zu einer Phase verschaltet sein oder hart verschaltet, parallel oder in Reihe zu mehreren an einem Umrichterkreis angeschlossen sein und wie üblich anhand ihrer Phasenlage zwischen dem Rotor und den Polen bestromt werden. So kann der Dreiphasenumrichter in Figur 4 mit einer 3-phasigen Wicklung in einer eins zu eins Anordnung je Statorzahnwicklung oder aber mit mehreren Spulen in Reihe oder Parallel zu einem dreiphasigen System verschaltet sein. Je nach Aufwand können 2 bis dutzende Phasen oder mehrere Phasen unabhängig, aber parallel betrieben werden.

Die Phasenlage der Reluktanzläuferpole können mittels Sensoren oder sensorlos ermittelt werden. Hierzu können geeignet die nicht zur Leistungserbringung verwendeten Reluktanzpole verwendet werden, indem sie als Sensor betrieben werden könnten. Die Bestromung der Pole kann anhand einer Regelung oder anhand eines ermittelten Stellbetriebs aus einer zuvor festgelegten Parametrisierung heraus erfolgen. Die Parameter dazu sind üblicherweise abhängig vom Betriebsquadranten und von der Lastanforderung und Drehzahl, sowie der Temperatur und einer denkbaren Geräuschvorgabe im jeweiligen Betriebszustand. Gerade bei Radnabenantrieben können drehzahlabhängig verschiedene Geräuschzustände möglich sein, die eine vereinfachte Ansteuerung oder verbesserte Wirksamkeit bei höheren Drehzahlen ermöglicht, da die Abroll- und Windgeräusche bei höheren Drehzahlen erheblich in den Vordergrund treten können. Dies ermöglicht dann eine zusätzliche drehzahlabhängige Variation der Polbestromung im Umrichter. Im Falle eines dreiphasigen Betriebs in Sternschaltung kann ein 120° versetzter sinusgeführter Umrichterbetrieb als Synchronreluktanzmaschine erfolgen.

Mit einem erfindungsgemäßen modularen Elektromaschinen- und Umrichterkonzept könnte der Antrieb bei geringwertigem Modulausfall weiter betrieben werden, wenn dies aufgrund der Modulgröße nicht zu einem Ungleichgewicht im Kraftfluss führt, was eine reine Frage der Modulgrößenabstaffelung und der Umrichteraufteilung auf die Spulensysteme ist. Die Stillstandszeiten für einen bedeutenden oder sicherheitsrelevanten Antrieb können erfindungsgemäß weitgehend vermieden werden.

Die Umrichter sind erfindungsgemäß mittels einem Bussystems oder einem externen Synchronisierungsschnittstelle derart miteinander verbunden, das sie eine abgestimmte Phasenbestromung der Polwicklungen darstellen können, so dass ein gleichmäßiger Drehmomentverlauf in Addition aller geschalteten Pole erzeugt wird. Hierbei ist bekanntermaßen bei Reluktanzmaschinen auf eine geeignete Stromführung und -überdeckung zum Ausgleich der Drehmomenterzeugung der einzelnen Pole zu achten. Die Verschaltung und Ansteuerung der Umrichter kann über eine übergeordnete Regelungseinheit erfolgen oder über eine Master-Slave-Verschaltung der Umrichtermodule.

Die Umrichter können maschinen- seitig eine oder mehrere Phasen enthalten, weiterhin bordnetzseitig bevorzugt 1-phasig sein. Dargestellt ist hier immer nur der maschinenseitige Umrichter bis zur DC Schiene des Radantriebsnetzes. Das Bordnetz kann mittels Hochsetzsteller oder Tiefsetzsteller über ein anderes Spannungsniveau als die DC-Ebene des Umrichters verfügen.

Weiterhin kann erfindungsgemäß eine aktive Stromregelung der Polbestromung erfolgen, um eine Geräusch- oder Drehmomentanregung zu minimieren. Dadurch kann z.B. ein mechanisch bewusst eingebrachtes Verkippen der Pole reduziert werden oder eine typische Brotlaibtopologie der Poloberflächen, welche beide in erheblichem Umfang analytisch und empirisch ermittelt werden müssen und die Entwicklungszeiten erhöhen.

In einer weiteren Ausführung kann die Funktionalität der Einzelumrichteransteuerung ebenso dazu Verwendung finden, nicht nur die Drehmomentsynchronistation und die Geräuschabstrahlung zu regeln, sondern auch die Bewegungsmöglichkeiten in torsionaler Richtung des Antriebes zur Regelung und/oder zur Dämpfung des Fahrbetriebs verwendet werden. Hierzu sind heute allgemein bauliche Ausführung in Achsantrieben nötig, um eine aktive Dämpfung der fahrdynamischen Anregungen zu bewirken, hier ist beides erfindungsgemäß über die Stromregelung möglich.

Die Elemente des Antriebes können hier als Zweimassenschwinger, bestehend aus Rotationskörper (Läufer und Radkörper) und statischer Masse (Stator), verstanden werden, die hier ideal gedämpft werden können. Die Struktur des Radantriebes und dessen Integration in den Radsatz des Fahrzeuges ermöglicht es, dass die beiden Massen des Systems, welche ein schwingungsfähiges System bilden könnten, direkt durch den Luftspalt getrennt sind und nicht wie sonst üblich durch eine Antriebswelle, die als Drehfeder wirkt. Es ergibt sich hier ein Zweimassenschwinger mit zentralem Luftspalt zur Bedämpfung der Bewegung des Radantriebes in Bezug zur rotatorischen Verformung: Die Magnetspaltkräfte liegen bedingt durch die Tragstruktur zwischen den beiden Schwingmassen und können über den Umrichter direkt dämpfend benutzt werden.

Bei klassischem Achsan- triebstrangaufbau liegt der Luftspaltbereich des Antriebsmotors hinter dem Massenschwinger, der mit einer Feder verbunden ist. Dadurch wird hier eine Bedämpfung des Systems vorteilhafterweise erheblich vereinfacht.

In einer weiteren Ausgestaltung der Erfindung ist es vorteilhaft, dass die Umrichter unabhängig voneinander, aber dennoch sychronisierbar motorisch und generatorisch betrieben werden können. Dadurch wird es erfindungsgemäß ermöglicht, eine Maschine in einer internen Leistungsrückführung zu betrieben, was bei einer Systemprüfung, einen Modultest oder einer Sonderanwendung von Vorteil ist. Zur Serienprüfung oder Typenprüfung eines Antriebes ist kein Prüfstand nötig, da hier kein externer Prüfantrieb benötigt wird. Die erfindungsgemäß interne Leistungsverzweigung führt dazu, dass die Maschine unter Drehmoment, bzw. unter Leistung gefahren werden kann, ohne über eine externe dementsprechend dimensionierte Antriebsmaschine und Drehmomentabstützung auf einem Plattenfeld zu benötigen. Da die interne Tragstruktur des Radnabenantriebes den Leistungsfluss Prinzip bedingt und auslegungsbedingt ertragen muss, reicht eine Fixierung als Standsicherung.

Bei der Ausführung und in der Betriebsweise als geschaltete Reluktanzmaschine kann hierzu ein Halbbrückenumrichter Verwendung finden, der weitere Kosten spart.

Als Fahrzeugantrieb mit mehreren Rädern kann erfindungsgemäß ein Rad als Generator betrieben werden, um im Sinne eines Spurhaltesystems oder Stabiltätsprogramms der Fahrdynamik einen Leistungsausgleich auf der DC-Ebene der Antriebsumrichter zu gewährleisten. Dadurch ist eine schnelle Leistungsführung möglich, ohne die Antriebsenergie aus dem Bordspeicher ziehen zu müssen. Dieser und dessen Einspeisungsvorrichtungen in das Umrichter DC-Netz können dadurch in Bezug auf die Spitzenlastfähigkeit reduziert werden.

In einer weiteren positiven Wirkung der Erfindung können technische Optimierungen z.B. der Fahrdynamik und Dämpfung, der Systemprüfung, der Pulssteuerung der Polbestromung, soweit möglich aus dem maschinenbaulichen oder elektromaschinenbaulichen Bereich in den elektronischen und regelungstechnischen Bereich verlagert werden, so dass sie in erheblich kürzeren Entwicklungszeiten mittels Softwareadaption im Umrichter optimiert werden können und zukünftig für die Radantriebe über Softwareupdates (virtuelle Trägheit) optimierungsfähig bleiben. Die jeweilige abrufbare Maximalleistung sollte vom Umrichter temperaturabhängig zur maximalen Maschinentemperatur, z.B. der Wicklungstemperatur oder Isolationstemperatur, geregelt werden.

Die Kühlung wird durch den eigenen Läufer erfüllt. Der Läufer an sich ist selbstkühlend, da er in Bezug zur Läuferfläche und der Statorfläche im Flächenverhältnis niedriger ausgenutzt ist. Da der Läufer eine Kühlung für die Statorsegmente bewirkt, die durch eine geeignete Zu- und Abluftführung und Luftführung außen um die Statorsegmente herum noch unterstützt werden kann, weist der Antrieb je nach Ausnutzung eine vollkommen autarke Kühlung der E-Maschinenkomponenten auf, so dass unter Umständen nur die Umrichter eine Zwangskühlung benötigen.

Die Statorsegmente können dazu neben der klassischen Rückseitenkühlung auch eine seitliche Kühlflächenausgestaltung erhalten. Diese wird durch den Luftzug des Läufers direkt erreicht und vergrößert die Kühlfläche in erheblichem Ausmaß.

Die reine Rückseitenkühlung heutiger Radialflussmaschinen ist aufgrund des Wärmetransportes aus dem Luftspalt- und Wicklungsbereich bis hin zur Blechpaketrückseite weniger optimal als im Seitenbereich. Hier nun können bedingt durch die Segmentierung im Seitenbereich und auch im Luftspalt neue Kühlflächen genutzt werden und bauartbedingt felgenseitig oder achsenseitig durch Luftleitvorrichtungen weitere Verbesserungen erzielt werden.

Der Luftspalt ist in einer vorteilhaften Ausführung parallel zur Achsrichtung des Antriebsrads gestellt (Figur 5 bis 9, 16, 17 und 18). Eine Achs- oder Radkörper-Biegung verschiebt den Läufer im Luftspalt in planpa- ralleler Richtung und ändert nicht die Dimensionierung des Luftspaltes. Diese Bauform wird erfindungsgemäß erst durch die Entkoppelung des Wärmegangs in seiner radialen Auswirkung ermöglicht und ermöglicht dadurch einen kleineren Luftspalt ohne die Tolerierung der Fertigungstoleranzen enger gestalten zu müssen.

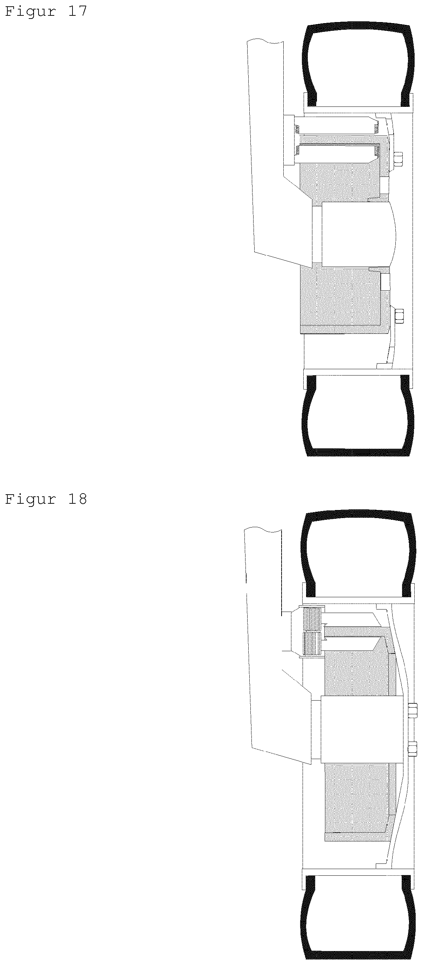

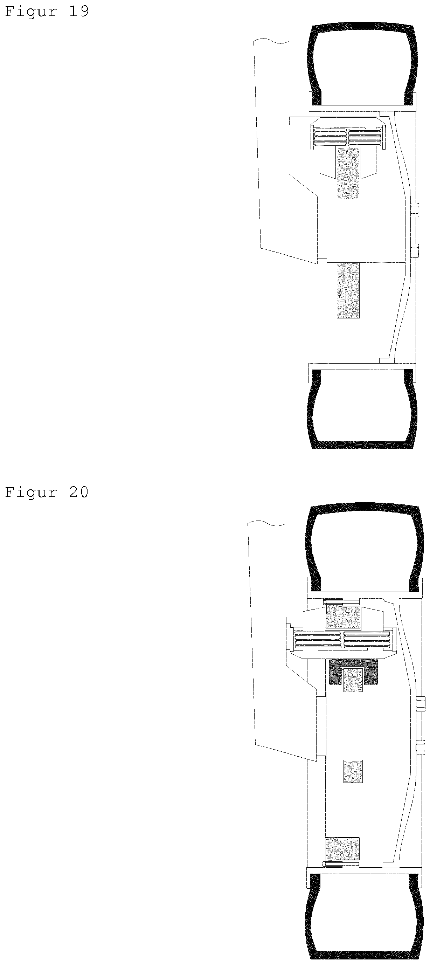

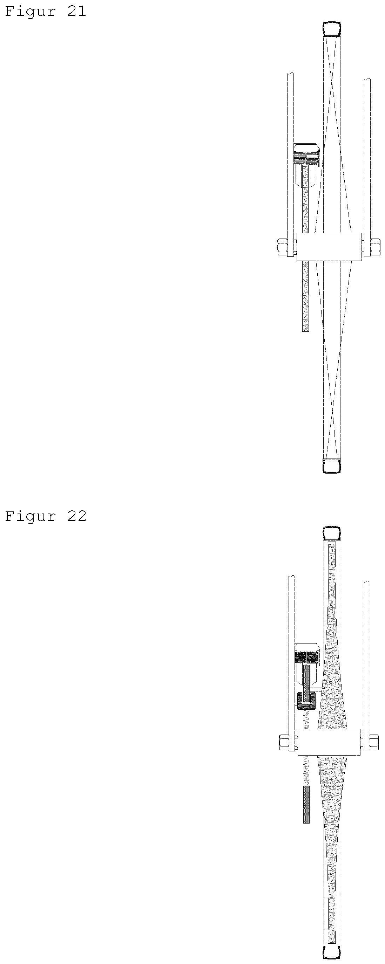

Weiterhin ist es möglich einen größeren Wirkdurchmesser des Läuferrings auszuwählen und die Statorspulen seitlich neben die Läuferringe zu setzen (Figur 18), da der Außendurchmesser durch die Radfelge begrenzt wird. In geeigneter Art und Weise kann eine Integration der Statorstruktur in die Felgenstruktur erfolgen (Figur 17). Der Läufer ist als Innen- oder Außenläufer in Form einer Scheibe (Figur 19 bis 22) oder einer Trommel (Figur 16, 17, 18) ausführbar. Eine mehrreihige Anordnung oder abgesetzte oder winkelig ausgeführte Luftspaltführung ist vorstellbar.

Ein weiterer Gegenstand der Erfindung betrifft die Integration des Radnabenmotors mit der Radaufhängung. Der Radnabenmotor ist als Direktantrieb ausgebildet, welcher sein Motordrehmoment als Antriebsdrehmoment getriebefrei an das Rad übergibt. Der Segmentantrieb kann bei Serienapplikation in die Antriebsstruktur einfacher integriert werden, da hier die vollumschlossene Ringbauform nicht notwendig ist. So kann in einer geeigneten Ausgestaltung die Tragstruktur des Läufers in die Tragstruktur der Achsaufhängung integriert werden und die Einzelbaugruppen der Statorsegmente lokal bedingt an eine geeignete Stelle am Achsträger montiert werden. Hier kann die heute bekannte Form der Integration des Bremssattels als Beispiel dienen. Auch eine Kombination der Antriebsstatoren mit einem Bremssattel ist aus mechanischer Sicht vorteilhaft, hierbei wird die Laststruktur wie sie heute bekannt ist nicht baulich verändert. Es können funktional identische Krafteinleitungspunkte Verwendung finden. Es würde konsequent auf den Kraftfluss der Applikation geachtet, eine Doppelverwendung minimiert die nicht gefederte Masse. Die Integration führt zu einer erheblichen Kosteneinsparung im Antriebstrang.

Auch ein Nachrüsten in bestehende Radträger ist einfach möglich, da ein hier beschriebenes System einfach als bereits fertig segmentierter Modulsatz für eine bestehende Radaufhängungsstruktur vorliegen kann. Der elektrische Antrieb kann generatorisch oder auch motorisch bremsen. Der Läufersegmentträger wiederum kann in geeigneter Art und Weise zusammen mit einer dann nur notwendigen Stillstands- bzw. Notbremse integriert werden. Die zusätzliche Verwendung des Läufer- oder Läuferträgers als Bremsscheibe ist möglich.

Ein Bremsen führt dann in jeder Form zu einer Verlustwärmeeinleitung in die Bremsscheibenstruktur und wird wie heute üblich abgeführt. Eine Synchronisation der Bremsleistung beider Systeme ist sinnvoll.

Die hier vorliegende Erfindung kann eine stark vereinfachte und damit kostengünstige Applikation im Bereich des Radnabenantriebs ermöglichen, da die Individualisierung der modulhaften Elektro-Maschine mit der Integration in den Fahrzeugbau applikationsgerecht erfolgen kann. Identische Statorblöcke und Läufersegmente können in unterschiedliche Radstrukturen integriert werden, die Verdoppelung der Statorblöcke verdoppelt die Antriebsleistung. Dies kann bis zum nahezu vollumfassenden ringförmigen Umschließen des Läuferrings mit Statorblöcken führen, was hier aber prinzipbedingt nicht zielführend ist. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Ringmaschine in Ausführung einer Reluktanzmaschine, die als geschaltete oder Synchronreluktanzmaschine betrieben wird, zur Verwendung als Radnabenantrieb, bei der
□ mittels Anordnung der Statorausführung des mindestens einem Statorblocks in radialer oder axialer Luftspaltorientierung,
□ der mindestens eine Statorblock den Ringläufer nur partiell zum Umfang umgibt,
□ die Wicklungen in Zahnspulenausführung oder verteilter Ausführung alleinig auf den Statorbereich ausgeführt sind,
□ der Läuferring in scheibenförmiger oder trommelförmiger Ausführung aus einer Tragstruktur und geblechten Ringsegmenten zur Flussführung besteht,
□ dessen Wicklungssystem des mindestens einen Statorblocks aus mindestens 2 Phasen besteht, die mit mindestens 1 maschinenseitigen Umrichterkreis pro Phase bestromt werden können,
□ die Umrichterkreise über eine Synchronisationsmöglichkeit zur Phasenbestromung aufweisen
□ netzseitig mindestens 1 Umrichterkreis zum motorischen und generatorischen Betrieb (4-Quadrantenbetrieb) aufweist.

2. Elektrische Ringmaschine nach Anspruch 1, bei der mittels einer doppeltwirkenden Anordnung der mindestens einen Statorausführung oder eine kombinierte Ausführung zweier Statorblöcke gegenüber der Läuferstruktur einen Kraftausgleich im doppelten Luftspalt bewirkt wird.

3. Elektrische Ringmaschine nach Anspruch 1, bei dem der Läuferring in scheibenförmiger oder trommelförmiger Ausführung aus einer Tragstruktur und geblechten Ringsegmenten zur Flussführung besteht und in Wirkrichtung der Umfangslänge in seinem Wärmegang entkoppelt ist.

4. Elektrische Ringmaschine nach Anspruch 3, bei dem die Wärmegangsentkopplung in Richtung der Umfangslänge innerhalb der Tragstruktur des geblechten Läufers als schlitzförmige und/oder bohrungsförmige Ausnehmung zur Reduzierung der Auswirkung der thermischen Ausdehnung der Läuferblechsegmente in Umfangsrichtung angebracht ist.

5. Elektrische Ringmaschine nach Anspruch 3, bei dem die Befestigung zwischen der Läufertragstruktur und der Läuferbleche als thermische Entkopplung und Isolierung wirkt, indem sie die thermische Ausdehnung der Läuferbleche in Umfangsrichtung teilweise ermöglicht, diese durch Ausnehmungen zwischen den Blechsegmenten aufgefangen wird und nur reduziert in die Läufertragstruktur eingebracht wird.

6. Elektrische Ringmaschine nach Anspruch 1 bis 3, bei dem die Läufertragstruktur Kühlluftführungen in Form von Durchbrüchen oder Lüfterelementen enthält, die die Statorstruktur durch Zirkularführung der Luft sowie des mindestens einen Statorblockes kühlen.

7. Elektrische Ringmaschine nach Anspruch 1 bis 3, mit zusätzlicher Permanentmagnetunterstützung der Flussbildung der D/Q Flussstruktur der als Ringmaschine ausgebildeten Reluktanzmaschine.

8. Elektrische Ringmaschine nach Anspruch 1 bis 3, mit mehreren abhängigen oder unabhängigen Phasen in dem einen oder mehrfachen Statormodul bei dem die mehreren maschinenseitigen Umrichterkreise des oder der Umrichter(s) über eine DC-Kopplung auf einen versorgungsseitigen Leistungskreis geführt werden und dass bei Synchronisation der Phasenbestromung ein Betrieb trotz Einzelausfall einer Phase oder eines maschinenseitigen Umrichterkreises weiterhin möglich ist.

9. Umrichteranordnung bzw. Betriebsweise für eine elektrische Maschine nach einem der vorherigen Ansprüche, bei der eine Anzahl von maschinenseitigen Umrichterkreisen auf eine Anzahl von unabhängigen oder unabhängigen Phasen pro Stator der Ringmaschine verschaltet werden, so dass bei Synchronisation der Phasenbestromung eine geeignete Stromführung zum Kraftausgleich der doppelseitigen Luftspaltstatorseiten kommt, der auch genutzt werden kann z.B. die Pulsationsanregung der schwingfähigen Strukturen in radialer Richtung zu manipulieren.

10. Umrichteranordnung bzw. Betriebsweise für eine elektrische Maschine nach einem der vorherigen Ansprüche, bei der eine Anzahl von maschinenseitigen Umrichterkreisen auf eine Anzahl von unabhängigen oder abhängigen Phasen pro Stator der Ringmaschine verschaltet werden, so dass bei Synchronisation der Phasenbestromung eine geeignete Stromführung zur dynamischen Regelung der torsionalen Eigenschaften der Ringmaschine herbeigeführt wird.

11. Umrichteranordnung für eine elektrische Maschine nach einem der vorherigen Ansprüche 1 bis 3, bei der eine Anzahl von baugleichen Umrichtern auf eine Anzahl von unabhängigen oder abhängigen Phasen pro Stator oder je Stator der Ringmaschine verschaltet werden und diese mittels einer übergeordneten Steuereinheit in ihrer Betriebsführung synchronisiert werden. Die Steuereinheit kann durch einen der baugleichen Umrichter in Form einer Master/Slave Funktion abgebildet werden.

12. Umrichteranordnung bzw. Betriebsweise für eine oder mehrere elektrische Maschine nach einem der vorherigen Ansprüche, bei der eine Anzahl von maschinenseitigen Umrichterkreisen auf eine Anzahl von unabhängigen Phasen pro Stator oder je Stator der Ringmaschine verschaltet werden, so dass bei Synchronisation der Phasenbestromung ein Betrieb mit innerer Leistungsverzweigung möglich ist, bei dem ein Teil der Umrichterkreise motorisch und ein weiterer Teil der Umrichterkreise generatorisch arbeiten, so dass es über die Tragstruktur zum Austausch von mechanischer und über den Zwischenkreis zu einem Austausch der elektrischen Leistung kommt und die Verlustleistung über den anschlussseitigen Umrichter zugeführt werden kann.

13. Anordnung von Baureihen einer Ringmaschine nach einem der vorherigen Ansprüche, die durch lineares Aufaddieren von Statorblöcken die Leistung abstaffelt.

14. Anordnung von Baureihen einer Ringmaschine nach einem der vorherigen Ansprüche, die durch Beibehalten der Auslegungsumfangsgeschwindigkeit für eine Polweitenauslegung, bevorzugt mit Zahnspulenwicklungen, die Drehmomentsteigerung innerhalb der Baugruppe durch Vergrößerung des Läuferdurchmesser bewirkt.

15. Elektrische Ringmaschine nach einem der vorherigen Ansprüche zum Einsatz als Radnabenantrieb, wobei die Ausgestaltung der Tragstruktur des Läufers in die Tragstruktur der Achsaufhängung integriert werden und die Einzelbaugruppen der Statorsegmente lokal bedingt an eine geeignete Stelle am Achsträger montiert werden. Der Kraftfluss entspricht einer heutigen Bremsscheibe- oder -trommelaufnahme und der Bremssattelaufnahme.
